# FASCICULE DE BREVET EUROPEEN

(11) **EP 2 262 671 B1**
(45) Date de publication et mention de la délivrance du brevet: **26.11.2014**
(21) Numéro de dépôt: 09733571.5
(22) Date de dépôt: 08.04.2009
(51) Int. Cl.: B60S 1/52

(54) **DISPOSITIF DE PROJECTION DE LIQUIDE DE LAVAGE SUR UNE VITRE DE VEHICULE**
VORRICHTUNG ZUM AUFSPRÜHEN VON WASCHFLÜSSIGKEIT AUF EIN AUTOFENSTER
DEVICE FOR SPRAYING WASHING LIQUID ONTO A CAR WINDOW

(30) Priorité: 15.04.2008 FR 0802085
(43) Date de publication de la demande: 22.12.2010
(73) Titulaire: Valeo Systèmes d'Essuyage, 78321 La Verrière (FR)
(72) Inventeur: JARASSON, Jean-Michel, F-78320 Le Mesnil St Denis (FR)
(74) Mandataire: Léveillé, Christophe
(86) Numéro de dépôt international: PCT/EP2009/054263
(87) Numéro de publication internationale: WO 2009/127583

(56) Documents cités:
- WO-A-2007/000346
- FR-A- 2 695 607
- FR-A- 2 747 975
- FR-A1- 2 756 527

## Description

La présente invention concerne un dispositif de projection d'un liquide de lavage sur une vitre de véhicule.

L'invention trouve une application particulièrement avantageuse dans le domaine des systèmes d'essuyage des vitres de véhicules automobiles.

Il existe aujourd'hui une technologie concernant les balais d'essuyage pour vitres de véhicule connue sous le nom de « balai souple » ou « balai plat » (« Flat Blade » en anglo-saxon) et dont un exemple de réalisation est décrit dans la demande internationale n° WO2007/000346.

Cette technologie « balai plat » consiste en une structure construite autour d'un élément central constitué par un support longitudinal en matériau plastique semi-rigide sur lequel sont rapportés divers autres éléments fonctionnels.

Un premier élément fonctionnel est une tige métallique logée dans une cavité longitudinale du support. Cette tige métallique a pour double fonction d'assurer, d'une part, à l'ensemble du balai d'essuyage la rigidité requise pour une bonne tenue mécanique, ainsi que la répartition de la pression exercée par le bras d'entraînement sur le pare-brise C'est pourquoi on la désigne souvent sous le terme de « vertèbre » (« spline » en anglo-saxon).

Un deuxième élément fonctionnel est une lame d'essuyage en élastomère fixée au support longitudinal par l'intermédiaire d'une griffe extrudée avec le support.

Enfin, un troisième élément fonctionnel est un accessoire destiné à améliorer là qualité de l'essuyage. En général, cet accessoire est en élastomère et est assemblé au support longitudinal par divers moyens, notamment par clippage.

Un premier type d'accessoire est, par exemple, un dispositif de projection d'un liquide de lavage approprié qui permet, par action conjuguée avec le mouvement de balayage de la lame d'essuyage, d'éliminer certaines particules solides pouvant se fixer sur les vitres, comme les projections de boue ou les résidus d'insectes écrasés contre le pare-brise. De manière pratique, un tel dispositif de projection comporte au moins une rampe de projection de forme sensiblement cylindrique disposée latéralement le long du support longitudinal. Dans une version mono-rampe, le dispositif de projection ne comporte qu'une seule rampe, tandis que, dans une version bi-rampes, le dispositif comporte deux rampes parallèles situées de part et d'autre du support longitudinal. De plus, les rampes sont munies d'ouvertures permettant la projection du liquide de lavage sur le pare-brise.

Un autre type d'accessoire peut être un déflecteur aérodynamique qui utilise le vent relatif du véhicule pour augmenter la force de contact de la lame d'essuyage contre la vitre à essuyer.

La demande internationale précitée illustre un balai d'essuyage relevant de la technologie « balai plat » dont l'accessoire combine en un seul élément un dispositif de projection de liquide avec un déflecteur aérodynamique.

Les ouvertures dont sont munies les rampes du dispositif de projection de liquide sont généralement de simples trous circulaires capables de produire un jet de liquide sensiblement rectiligne formant sur la vitre du véhicule un impact ponctuel.

On comprend cependant que la quantité de liquide ainsi projeté peut dans certains cas se révéler insuffisante, notamment lorsqu'il s'agit de dégivrer ou nettoyer un pare-brise particulièrement sale. Dans ces circonstances en effet, des quantités plus importantes de liquide sont nécessaires si l'on veut éviter que les opérations de dégivrage ou de nettoyage ne prennent un temps trop long, incompatible avec les exigences de la sécurité automobile.

Aussi, un but de l'invention est de proposer un dispositif de projection qui permettrait d'augmenter la mouillabilité des vitres, pare-brise notamment, par une meilleure répartition du liquide de lavage à l'impact sur les vitres.

Ce but est atteint, conformément à l'invention, grâce à un dispositif de projection d'un liquide de lavage sur une vitre de véhicule, comprenant au moins une rampe munie d'au moins une ouverture destinée à projeter ledit liquide sur ladite vitre dans une direction donnée, remarquable en ce qu'au moins une ouverture présente une forme apte à projeter le liquide de lavage sous la forme d'un faisceau s'étendant autour de la direction de projection, perpendiculairement à ladite rampe.

Ainsi, comme on le verra en détail plus loin, le liquide de lavage est projeté en un faisceau étroit présentant un impact étendu en profondeur sur une distance beaucoup plus grande que celle d'un impact ponctuel obtenu avec un jet sensiblement rectiligne. Il en résulte que la quantité de liquide projeté est mieux répartie sur la vitre. La mouillabilité de la vitre se trouve donc augmentée, ce qui permet d'en accélérer le dégivrage ou le nettoyage, conformément au but visé par l'invention.

Selon un mode de réalisation, ladite ouverture présente une forme oblongue perpendiculairement à ladite rampe. En particulier, ladite ouverture présente une forme oblongue évasée perpendiculairement à ladite rampe. Par forme évasée, on fait référence ici au fait que les parois de l'ouverture divergent dans l'épaisseur de la rampe, alors que pour une forme oblongue simple les parois restent parallèles à leur traversée de l'épaisseur de la rampe.

De manière à augmenter encore la surface de l'impact de projection et donc d'obtenir une meilleure mouillabilité de la vitre à nettoyer, l'invention prévoit que ladite ouverture présente une forme également apte à projeter le liquide de lavage sous la forme d'un faisceau s'étendant perpendiculairement à la direction de projection.

On réalise alors un faisceau non seulement étendu en profondeur mais également en largeur pour une répartition optimale du liquide de lavage sur la vitre.

Dans ce contexte, un certain nombre de formes d'ouverture peut être envisagé.

Selon une première variante, ladite ouverture présente une forme conique. Plus particulièrement, ladite ouverture présente une forme conique de révolution.

Selon une deuxième variante, ladite ouverture présente une forme tétraédrique.

Une mouillabilité encore meilleure de la vitre peut être réalisée si, comme le propose l'invention, ladite ouverture présente une forme également apte à projeter le liquide de lavage dans une direction inclinée par rapport à un plan perpendiculaire à ladite rampe.

Dans le cas d'un dispositif mono-rampe, cette disposition permet d'orienter favorablement la direction de projection, notamment vers le bas du balai s'essuyage, de manière à profiter de l'effet de récupération induit par le mouvement du balai lui-même et du mouvement aérodynamique lié au déplacement du véhicule.

Dans le cas d'un dispositif bi-rampes, il est prévu par l'invention que, ledit dispositif comprenant deux rampes de projection parallèles, les directions de projection des ouvertures d'une rampe et les directions de projection des ouvertures de l'autre rampe sont parallèles. Dans une autre forme de réalisation, les directions de projection des ouvertures d'une rampe et les directions de projection des ouvertures de l'autre rampe sont antiparallèles.

On obtient ainsi un double avantage, à savoir celui de l'effet de récupération mentionné plus haut auquel s'ajoute celui de l'effet de complémentarité entre les impacts de projection produits par les rampes au cours du mouvement d'aller-retour du balai d'essuyage.

Enfin, l'effet de complémentarité entre impacts peut également être obtenu du fait que, ledit système comprenant deux rampes de projection parallèles, les ouvertures ménagées le long desdites rampes sont disposées en quinconce.

Enfin, l'invention concerne également un balai d'essuyage remarquable en ce qu'il comporte un dispositif de projection selon l'invention.

La description qui va suivre en regard des dessins annexés, donnés à titre d'exemples non limitatifs, fera bien comprendre en quoi consiste l'invention et comment elle peut être réalisée.

La figure 1 a est une vue de face d'un premier mode de réalisation d'une ouverture de rampe d'un dispositif de projection conforme à l'invention.

La figure 1b est une vue de côté d'un balai d'essuyage comportant le dispositif de projection de la figure 1a.

La figure 1c est une vue en perspective du balai d'essuyage de la figure 1b.

La figure 2a est une vue de face d'un deuxième mode de réalisation d'une ouverture de rampe d'un dispositif de projection conforme à l'invention.

La figure 2b est une vue en perspective d'un balai d'essuyage comportant le dispositif de projection de la figure 2a.

La figure 3 est un schéma en vue de dessus d'un dispositif de projection bi-rampes à répartition d'ouvertures en quinconce.

Les figures 4a à 4b sont des schémas en vue de dessus de dispositifs de projection bi-rampes à directions de projection inclinées.

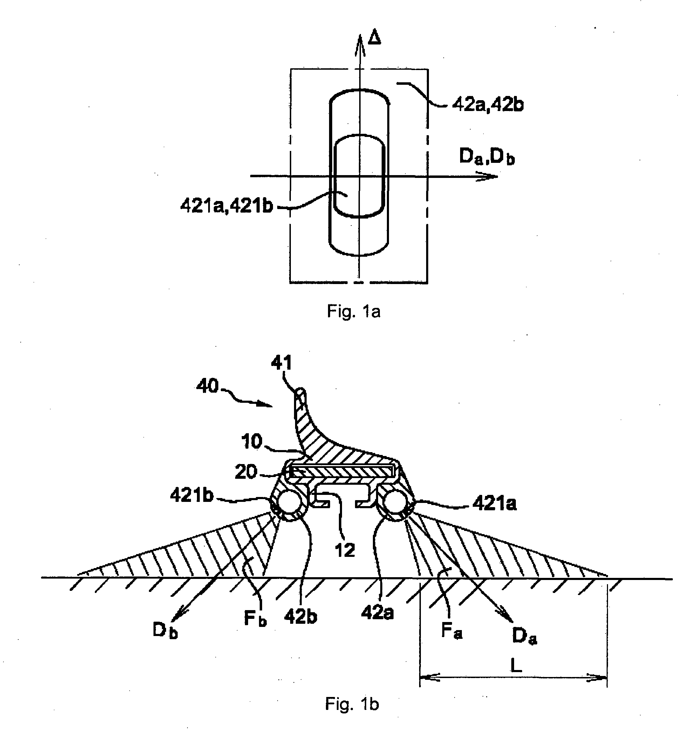

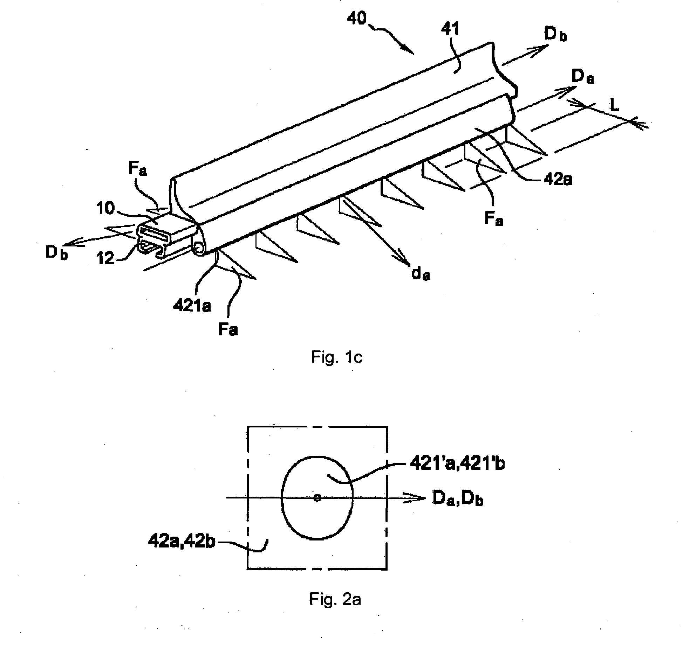

Sur les figures 1b et 1c est représenté un balai d'essuyage pour vitres de véhicules comprenant un support longitudinal 10 en matériau plastique semi-rigide extrudé. Ce support 10 comporte, conformément à la technologie « balai souple » ou « balai plat » (« Flat Blade »), un logement destiné à recevoir une tige métallique 20 de rigidification, ou « vertèbre », de forme plate s'étendant sensiblement sur toute la longueur du système d'essuyage. Le support 10 comporte également une griffe longitudinale 12 dans laquelle est introduite une lame d'essuyage en élastomère, non représentée sur les figures.

Sur le support longitudinal 10 est assemblé et fixé un accessoire 40 réalisé par extrusion indépendamment du support 10. Dans les divers exemples de réalisation illustrés sur les figures, l'accessoire 40 comprend un dispositif de projection de fluide constitué d'au moins une rampe longitudinale 42a, 42b percée d'ouvertures 421a, 421b afin de permettre la projection d'un liquide de lavage par exemple sur une vitre du véhicule. L'accessoire 40 est en général constitué d'un seul matériau, ici un élastomère extrudé.

Par ailleurs, on peut observer sur les figures la présence sur l'accessoire 40 d'un déflecteur aérodynamique 41 destiné à améliorer le contact de la lame 30 d'essuyage contre la vitre du véhicule. Il faut cependant souligner que ce déflecteur aérodynamique 41 n'est pas essentiel pour l'invention.

Comme on peut le voir sur la figure 1a, les ouvertures 421 a, 421 b des rampes 42a, 42b présentent une forme oblongue évasée dans une direction Δ perpendiculaire à la direction Dₐ, D_{b} des rampes.

Cette géométrie particulière offre l'avantage illustré sur les figures 1b et 1c de projeter le liquide de lavage sous la forme de faisceaux étroits Fₐ, F_{b} s'étendant autour des directions moyennes dₐ, d_{b} de projection, perpendiculairement aux directions Dₐ, D_{b} des rampes 42a, 42b.

L'impact du liquide projeté sur la vitre est donc augmenté dans le sens de la profondeur d'une distance L par rapport à l'impact ponctuel obtenu avec un jet rectiligne produit par un simple trou. La répartition du liquide sur la vitre est donc améliorée pour une meilleure mouillabilité et un nettoyage plus efficace et plus rapide dans des conditions particulièrement difficiles liées par exemple à la présence sur le pare-brise de givre ou de salissures tenaces, comme des résidus d'insectes écrasés.

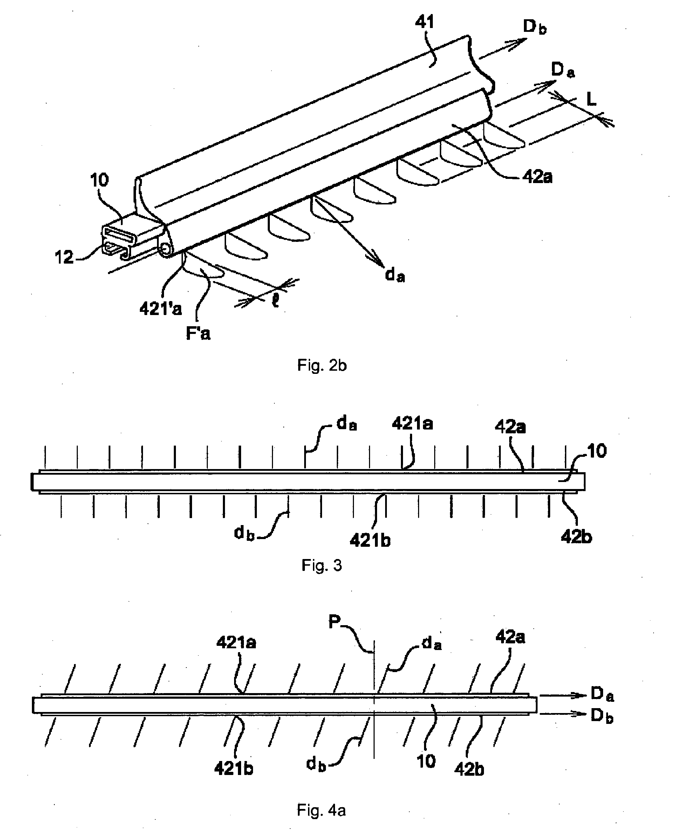

Sur la figure 2b, on peut voir que la surface de l'impact d'un faisceau de liquide sur la vitre est encore augmentée si l'on donne aux ouvertures 421'a de la rampe 42a une forme telle que le faisceau projeté, tel que F'ₐ par exemple, s'étende également sur une distance l dans le sens de la largeur, c'est-à-dire dans une direction perpendiculaire à la direction moyenne dₐ de projection.

Pour ce faire, la figure 2a montre un exemple de réalisation dans lequel les ouvertures 421'a, 421'b ont une forme conique, par exemple conique de révolution. Bien entendu d'autres formes permettraient d'atteindre le même résultat, comme une forme tétraédrique par exemple.

Un autre moyen d'améliorer la mouillabilité de la vitre consiste, comme l'illustre la figure 3, à disposer en quinconce les ouvertures 421a de la rampe 42a et les ouvertures 421 b de la rampe 42b.

Seules les directions moyennes dₐ, d_{b} de projection, et non les faisceaux eux-mêmes, ont été représentées sur la figure 3. Mais on comprend néanmoins facilement l'effet de complémentarité au niveau des impacts qui se produit lors du mouvement de va-et-vient du balai d'essuyage entre les faisceaux de projection issus d'une rampe et les faisceaux de projection, décalés par rapport aux précédents, issus de l'autre rampe.

Les figures 4a à 4c montrent des réalisations contribuant également à une amélioration de la mouillabilité du fait que les directions de projection de liquide sont inclinées par rapport à un plan perpendiculaire P à la direction Dₐ, D_{b} des rampes 42a, 42b.

Dans l'exemple de réalisation de la figure 4a, toutes les directions dₐ, d_{b} de projection des ouvertures 421a, 421b d'une même rampe 42a, 42b sont parallèles et confondues deux à deux.

Les ouvertures permettant une telle réalisation peuvent être déduites par exemple des ouvertures montrées aux figures 1a et 2b en inclinant leur axe de symétrie de l'angle d'inclinaison souhaité pour la direction de projection.

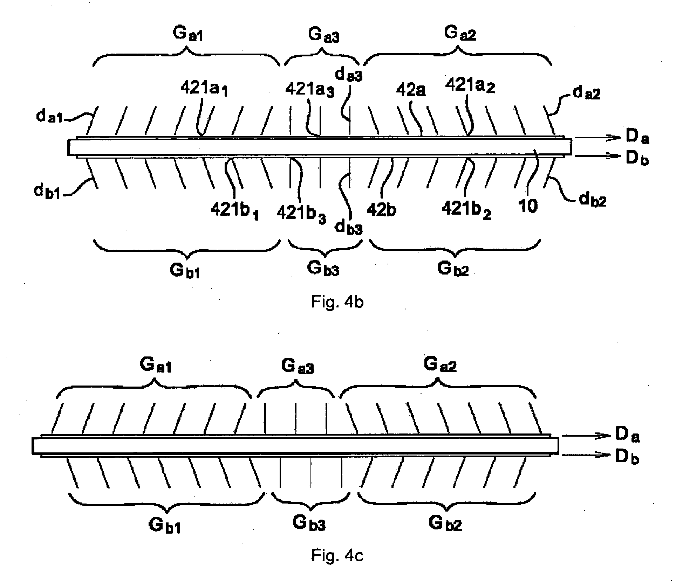

Dans l'exemple de réalisation de la figure 4b, la rampe 42a comporte un premier groupe Gₐ₁ d'ouvertures 421a₁ présentant des directions dₐ₁ de projection parallèles entre elles, un deuxième groupe Gₐ₂ d'ouvertures 421a₂ présentant des directions dₐ₂ de projection parallèles entre elles et antiparallèles à celles du groupe Gₐ₁, et un groupe central Gₐ₃ d'ouvertures 421a₃ présentant des directions dₐ₃ de projection perpendiculaires à la direction Dₐ de la rampe 42a.

De même, la rampe 42b comporte un premier groupe G_{b1} d'ouvertures 421b₁ présentant des directions d_{b1} de projection parallèles entre elles et antiparallèles à celles du groupe Gₐ₁, un deuxième groupe G_{b2} d'ouvertures 421b₂ présentant des directions d_{b2} de projection parallèles entre elles et antiparallèles à celles du groupe G_{b1}, et un groupe central G _{b3} d'ouvertures 421b₃ présentant des directions d_{b3} de projection perpendiculaires à la direction D_{b} de la rampe 42b.

L'exemple de réalisation de la figure 4c se déduit de celui de la figure 4b par une disposition en quinconce des ouvertures de la rampe 42a et des ouvertures de la rampe 42b.

## Revendications

1. Balai d'essuie-glace constitué :
- d'un support longitudinal (10) en matériau plastique semi-rigide extrudé, le support (10) comportant un logement destiné à recevoir une tige métallique (20) de rigidification de forme plate s'étendant sensiblement sur toute la longueur du balai d'essuie-glace,
- d'un accessoire (40) réalisé par extrusion indépendamment du support (10), ledit accessoire (40) est assemblé et fixé sur ledit support (10),
l'accessoire (40) comprenant un dispositif de projection d'un liquide de lavage sur une vitre de véhicule, comprenant au moins une rampe (42a, 42b) munie d'au moins une ouverture (421 a, 421 b) destinée à projeter ledit liquide sur ladite vitre dans une direction (dₐ, d_{b}) donnée, l'ouverture (421 a, 421 b) présentant une forme apte à projeter le liquide de lavage sous la forme d'un faisceau (Fₐ, F_{b}) s'étendant, autour de la direction (dₐ, d_{b}) de projection, perpendiculairement à ladite rampe (42a, 42b), **caractérisé en ce que** la rampe comprend une autre ouverture apte à projeter le liquide de lavage sous la forme d'un faisceau (Fₐ, F_{b}) dans une direction (dₐ, d_{b}) inclinée par rapport à un plan (P) perpendiculaire à ladite rampe (42a, 42b).

2. Balai d'essuie-glace selon la revendication 1, dans lequel ladite ouverture (421a, 421 b) présente une forme oblongue perpendiculairement à ladite rampe (42a, 42b).

3. Balai d'essuie-glace selon la revendication 2, dans lequel ladite ouverture présente une forme oblongue évasée perpendiculairement à ladite rampe.

4. Balai d'essuie-glace selon la revendication 1, dans lequel ladite ouverture (421'a, 421'b) présente une forme également apte à projeter le liquide de lavage sous la forme d'un faisceau (F'ₐ) s'étendant perpendiculairement à la direction (dₐ) de projection.

5. Balai d'essuie-glace selon la revendication 4, dans lequel ladite ouverture (421'a, 421'b) présente une forme conique.

6. Balai d'essuie-glace selon la revendication 5, dans lequel ladite ouverture présente une forme conique de révolution.

7. Balai d'essuie-glace selon la revendication 4, dans lequel ladite ouverture présente une forme tétraédrique.

8. Balai d'essuie-glace selon la revendication 1, dans lequel, ladite rampe comportant une pluralité d'ouvertures, les directions (dₐ, d_{b}) de projection desdites ouvertures (421 a, 421 b) sont parallèles.

9. Balai d'essuie-glace selon la revendication 1, dans lequel, ladite rampe comportant une pluralité d'ouvertures, les directions (dₐ₁) de projection d'un premier groupe (Gₐ₁) d'ouvertures et les directions (dₐ₂) de projection d'un deuxième groupe (Gₐ₂) d'ouvertures sont antiparallèles.

10. Balai d'essuie-glace selon la revendication 9, dans lequel lesdits premier (Gₐ₁) et deuxième (Gₐ₂) groupes d'ouvertures sont séparés par un troisième groupe (Gₐ₃) d'ouvertures dont les directions (dₐ₃) de projection sont contenues dans un plan (P) perpendiculaire à ladite rampe (42a).

11. Balai d'essuie-glace selon la revendication 8, comprenant deux rampes (42a, 42b) de projection parallèles, et dans lequel les directions (dₐ) de projection des ouvertures d'une rampe (42a) et les directions (d_{b}) de projection des ouvertures de l'autre rampe (42b) sont parallèles.

12. Balai d'essuie-glace selon la revendication 11, dans lequel les directions de projection (dₐ) des ouvertures d'une rampe (42a) et les directions (d_{b}) de projection des ouvertures de l'autre rampe (42b) sont confondues deux à deux.

13. Balai d'essuie-glace selon l'une des revendications 9 ou 10, comprenant deux rampes (42a, 42b) de projection parallèles, et dans lequel les directions (dₐ₁, dₐ₂) de projection des ouvertures d'une rampe (42a) et les directions (d_{b1}. d_{b2}) de projection des ouvertures de l'autre rampe (42b) sont antiparallèles.

14. Balai d'essuie-glace selon l'une quelconque des revendications 1 à 13, comprenant deux rampes (42a, 42b) de projection parallèles, et dans lequel les ouvertures ménagées le long desdites rampes sont disposées en quinconce.

## Patentansprüche

1. Scheibenwischer, bestehend aus:
- einem Längsträger (10) aus halbstarrem extrudiertem Kunststoff, wobei der Träger (10) eine Aufnahme aufweist, die dazu bestimmt ist, einen Metallschaft (20) zum Versteifen in flacher Form, der sich im Wesentlichen auf der gesamten Länge des Scheibenwischers erstreckt, aufzunehmen,
- einem Zubehörteil (40), das durch Extrusion unabhängig von dem Träger (10) hergestellt wird, wobei das Zubehörteil (40) auf dem Träger (10) zusammengebaut und befestigt ist,
wobei das Zubehörteil (40) eine Vorrichtung zum Aufsprühen einer Waschflüssigkeit auf eine Fahrzeugfensterscheibe aufweist, die mindestens eine Rampe (42a, 42b) aufweist, die mit mindestens einer Öffnung (421a, 421b) versehen ist, die dazu bestimmt ist, die Flüssigkeit auf die Scheibe in eine gegebene Richtung (dₐ, d_{b}) zu sprühen, wobei die Öffnung (421a, 421b) eine Form aufweist, die geeignet ist, die Waschflüssigkeit in der Form eines Strahls (Fₐ, F_{b}) zu sprühen, der sich um die Sprührichtung (d₃, d_{b}) senkrecht zu der Rampe (42a, 42b) erstreckt,
**dadurch gekennzeichnet, dass** die Rampe eine andere Öffnung aufweist, die geeignet ist, die Waschflüssigkeit in der Form eines Strahls (Fₐ, F_{b}) in eine Richtung (d₃, d_{b}), die in Bezug auf eine Ebene (P) senkrecht zu der Rampe (42a, 42b) geneigt ist, zu sprühen.

2. Scheibenwischer nach Anspruch 1, bei dem die Öffnung (421a, 421b) eine längliche Form senkrecht zu der Rampe (42a, 42b) aufweist.

3. Scheibenwischer nach Anspruch 2, bei dem die Öffnung eine längliche aufgeweitete Form senkrecht zu der Rampe aufweist.

4. Scheibenwischer nach Anspruch 1, bei dem die Öffnung (421'a, 421'b) eine Form aufweist, die auch geeignet ist, die Waschflüssigkeit in der Form eines Strahls (F'ₐ), der sich senkrecht zu der Sprührichtung (dₐ) erstreckt, zu sprühen.

5. Scheibenwischer nach Anspruch 4, bei dem die Öffnung (421'a, 421'b) eine Kegelform aufweist.

6. Scheibenwischer nach Anspruch 5, bei dem die Öffnung eine Rotationskegelform aufweist.

7. Scheibenwischer nach Anspruch 4, bei dem die Öffnung eine Tetraederform aufweist.

8. Scheibenwischer nach Anspruch 1, bei dem die Rampe eine Mehrzahl von Öffnungen aufweist, wobei die Sprührichtungen (dₐ, d_{b}) der Öffnungen (421a, 421b) parallel sind.

9. Scheibenwischer nach Anspruch 1, bei dem bei der Rampe, die eine Mehrzahl von Öffnungen aufweist, die Sprührichtungen (dₐ₁) einer ersten Gruppe (Gₐ₁) von Öffnungen und die Sprührichtungen (dₐ₂) einer zweien Gruppe (Gₐ₂) von Öffnungen antiparallel sind.

10. Scheibenwischer nach Anspruch 9, bei dem die erste (Gₐ₁) und die zweite (Gₐ₂) Öffnungsgruppe durch eine dritte Gruppe (Gₐ₃) von Öffnungen getrennt sind, deren Sprührichtungen (dₐ₃) in einer Ebene (P) senkrecht zu der Rampe (42a) enthalten sind.

11. Scheibenwischer nach Anspruch 8, der zwei parallele Sprührampen (42a, 42b) aufweist, und bei dem die Sprührichtungen (dₐ) der Öffnungen einer Rampe (42a) und die Sprührichtungen (d_{b}) der Öffnungen der anderen Rampe (42b) parallel sind.

12. Scheibenwischer nach Anspruch 11, bei dem die Sprührichtungen (dₐ) der Öffnungen einer Rampe (42a) und die Sprührichtungen (d_{b}) der Öffnungen der anderen Rampe (42b) zu je zwei zusammenfallen.

13. Scheibenwischer nach einem der Ansprüche 9 oder 10, der zwei parallele Sprührampen (42a, 42b) aufweist, und bei dem die Sprührichtungen (dₐ₁, dₐ₂) der Öffnungen einer Rampe (42a) und die Sprührichtungen (d_{b1}, d_{b2}) der Öffnungen der anderen Rampe (42b) antiparallel sind.

14. Scheibenwischer nach einem der Ansprüche 1 bis 13, der zwei parallele Sprührampen (42a, 42b) aufweist, und bei dem die Öffnungen, die entlang der Rampen eingerichtet sind, im Zickzack angeordnet sind.

## Claims

1. Windscreen wiper consisting of:
- a longitudinal support (10) made of extruded semirigid plastic, the support (10) comprising a housing designed to receive a flat metal stiffening rod (20) extending substantially along the entire length of the Windscreen wiper,
- an accessory (40) produced by extrusion, separately from the support (10), said accessory (40) being assembled and attached to said support (10),
wherein the accessory (40) comprises a device for spraying a washing liquid onto a vehicle window, comprising at least one manifold (42a, 42b) having at least one opening (421a, 421b) designed to spray said liquid onto said window in a given direction (dₐ, d_{b}), the opening (421a, 421b) having a shape suited to spraying the washing liquid in the form of a jet (Fₐ, F_{b}) which extends, about the spraying direction (dₐ, d_{b}), perpendicular to said manifold (42a, 42b),
**characterized in that** the manifold comprises another opening suited to spraying the washing liquid in the form of a jet (Fₐ, F_{b}) in a direction (dₐ, d_{b}) which is inclined with respect to a plane (P) that is perpendicular to said manifold (42a, 42b).

2. Windscreen wiper according to Claim 1, in which said opening (421a, 421b) has an oblong shape perpendicular to said manifold (42a, 42b).

3. Windscreen wiper according to Claim 2, in which said opening has an oblong shape which widens perpendicular to said manifold.

4. Windscreen wiper according to Claim 1, in which said opening (421'a, 421'b) has a shape which is also able to spray the washing liquid in the form of a jet (F'ₐ) which extends perpendicular to the spraying direction (dₐ).

5. Windscreen wiper according to Claim 4, in which said opening (421'a, 421'b) has a conical shape.

6. Windscreen wiper according to Claim 5, in which said opening has a revolved conical shape.

7. Windscreen wiper according to Claim 4, in which said opening has a tetrahedral shape.

8. Windscreen wiper according to Claim 1, in which, said manifold comprising a plurality of openings, the spraying directions (dₐ, d_{b}) of said openings (421a, 421b) are parallel.

9. Windscreen wiper according to Claim 1, in which, said manifold comprising a plurality of openings, the spraying directions (dₐ₁) of a first group (Gₐ₁) of openings and the spraying directions (dₐ₂) of a second group (Gₐ₂) of openings are antiparallel.

10. Windscreen wiper according to Claim 9, in which said first (Gₐ₁) and second (Gₐ₂) groups of openings are separated by a third group (Gₐ₃) of openings whose spraying directions (dₐ₃) are contained in a plane (P) perpendicular to said manifold (42a).

11. Windscreen wiper according to Claim 8, comprising two parallel spraying manifolds (42a, 42b) and in which the spraying directions (dₐ) of the openings of one manifold (42a) and the spraying directions (d_{b}) of the openings of the other manifold (42b) are parallel.

12. Windscreen wiper according to Claim 11, in which the spraying directions (dₐ) of the openings of one manifold (42a) and the spraying directions (d_{b}) of the openings of the other manifold (42b) coincide in pairs.

13. Windscreen wiper according to either of Claims 9 and 10, comprising two parallel spraying manifolds (42a, 42b), and in which the spraying directions (dₐ₁, dₐ₂) of the openings of one manifold (42a) and the spraying directions (d_{b1}, d_{b2}) of the openings of the other manifold (42b) are antiparallel.

14. Windscreen wiper according to any one of Claims 1 to 13, comprising two parallel spraying manifolds (42a, 42b), and in which the openings created along the length of said manifolds are arranged in a zigzag.
